# EUROPÄISCHE PATENTSCHRIFT

(11) **EP 3 967 571 B1**
(45) Veröffentlichungstag und Bekanntmachung des Hinweises auf die Patenterteilung: **09.10.2024**
(21) Anmeldenummer: 21190446.1
(22) Anmeldetag: 09.08.2021
(51) Int. Cl.: B62D 1/00, B62D 15/02, G05D 1/00

(54) **VERFAHREN ZUM BETREIBEN EINES RÜCKFAHRASSISTENZSYSTEMS FÜR EIN FAHRZEUG UND RÜCKFAHRASSISTENZSYSTEM**
METHOD FOR OPERATING A REVERSING ASSISTANCE SYSTEM FOR A VEHICLE AND REVERSING ASSISTANCE SYSTEM
PROCÉDÉ DE FONCTIONNEMENT D'UN SYSTÈME D'AIDE À LA MARCHE ARRIÈRE POUR UN VÉHICULE ET SYSTÈME D'AIDE À LA MARCHE ARRIÈRE

(30) Priorität: 11.09.2020 DE 102020211461
(43) Veröffentlichungstag der Anmeldung: 16.03.2022
(73) Patentinhaber: Volkswagen Aktiengesellschaft, 38440 Wolfsburg (DE)
(72) Erfinder: Günzel, Thorben, 38118 Braunschweig (DE); Munk, Sebastian, 38440 Wolfsburg (DE); Marek, Gregor, 38176 Wendeburg (DE); Zeise, Björn, 31141 Hildesheim (DE)

(56) Entgegenhaltungen:
- DE-A1- 102005 009 703
- US-A1- 2019 329 822
- US-A1- 2020 026 296
- US-A1- 2020 180 691

## Beschreibung

Die Erfindung betrifft ein Verfahren zum Betreiben eines Rückfahrassistenzsystems für ein Fahrzeug und ein Rückfahrassistenzsystem. Ferner betrifft die Erfindung ein Fahrzeug.

Es sind Rückfahrassistenzsysteme für Fahrzeuge bekannt, welche bis zu einer Maximalgeschwindigkeit (z.B. 35 km/h) eine bereits gefahrene Trajektorie (z.B. die letzten 50 Meter) abspeichern und die bereits gefahrene Trajektorie teilautomatisiert oder automatisiert rückwärts wieder abfahren können.

Aus der DE 10 2015 217 555 A1 sind ein Fortbewegungsmittel, eine Vorrichtung sowie ein Verfahren zur Manöverassistenz für ein Fortbewegungsmittel bekannt. Das Verfahren umfasst die Schritte: Ermitteln von Stellgrößen und Messgrößen des Fortbewegungsmittels bei einer Fahrt auf einer ersten Wegstrecke, Ermitteln einer ersten Trajektorie des Fortbewegungsmittels für die erste Wegstrecke auf Basis der Stellgrößen und Messgrößen, Ermitteln einer Wunschtrajektorie für das Fortbewegungsmittel zu der ersten Trajektorie, Vergleichen der Wunschtrajektorie mit einer zu einem früheren Zeitpunkt gefahrenen Referenztrajektorie, und, sofern ein hinreichendes Maß an Übereinstimmung besteht, Verwenden von Stellgrößen und Messgrößen, welche der Referenztrajektorie zugeordnet sind, für die Manöverassistenz. Es kann vorgesehen sein, dass die Wunschtrajektorie einer Rückwärtsfahrt des Fortbewegungsmittels auf der ersten Trajektorie entspricht.

Aus der DE 10 2014 213 074 A1 ist ein Rückfahrassistenzsystem für ein zweispuriges Kraftfahrzeug mit Vorderradlenkung zum Zurückfahren in Rückwärtsrichtung einer zuvor in Vorwärtsrichtung manuell gefahrenen Fahrstrecke bekannt. Das Rückfahrassistenzsystem erlaubt zumindest ein automatisches Lenken des Kraftfahrzeugs während des Zurückfahrens. Das Rückfahrassistenzsystem ist eingerichtet, für verschiedene Positionen der bei der Vorwärtsfahrt durchlaufenen Fahrstrecke jeweils einen Wert einer für die Ausrichtung der Fahrzeuglängsachse bei Vorwärtsfahrt charakteristischen ersten Größe an der jeweiligen Position in Abhängigkeit einer zurückgelegten Wegstrecke des einen Hinterrads und einer zurückgelegten Wegstrecke des anderen Hinterrads zu bestimmen. Insbesondere werden berechnete Werte der für die Ausrichtung der Fahrzeuglängsachse bei Vorwärtsfahrt charakteristischen ersten Größe (mit einer Zuordnung zu der jeweiligen Position) in einem Datenspeicher abgespeichert und dann später bei der Rückwärtsfahrt diese Werte wieder aus dem Datenspeicher ausgelesen und für die Steuerung der Vorderradlenkung verwendet. Für verschiedene Positionen der bei der Rückwärtsfahrt durchlaufenen Fahrstrecke wird jeweils ein Wert einer für die Ausrichtung charakteristischen zweiten Größe an der jeweiligen Position in Abhängigkeit einer zurückgelegten Wegstrecke des einen Hinterrads und einer zurückgelegten Wegstrecke des anderen Hinterrads bestimmt. Es wird während der Rückwärtsfahrt für verschiedene Positionen der Fahrstrecke jeweils ein Wert der für die Ausrichtung der Fahrzeuglängsachse bei Vorwärtsfahrt charakteristischen ersten Größe an der jeweiligen Position mit einem Wert der für die Ausrichtung der Fahrzeuglängsachse bei Rückwärtsfahrt charakteristischen zweiten Größe an der gleichen Position verglichen, und in Abhängigkeit des Vergleichs wird die Vorderradlenkung gesteuert.

Aus der DE 10 2005 009 703 A1 sind eine Parkhilfsvorrichtung für ein Fahrzeug und ein Verfahren zur Parkunterstützung bekannt, bei dem eine zurückgelegte Wegstrecke von einem Anfangspunkt zu einem Endpunkt gespeichert wird. Anschließend kann das Fahrzeug automatisch entlang der gespeicherten Wegstrecke geführt werden. DE 10 2005 009703 A1 offenbart insbesondere ein Verfahren zum Betreiben eines Rückfahrassistenzsystems für ein Fahrzeug, wobei das Rückfahrassistenzsystem ein rückwärtiges Befahren einer bereits gefahrenen Trajektorie zumindest teilautomatisiert durchführt, wobei mittels einer Steuereinrichtung eine maximale Weglänge für das rückwärtige Befahren der bereits gefahrenen Trajektorie in Abhängigkeit eines für das rückwärtige Befahren der bereits gefahrenen Trajektorie zu erwartenden Fehlers bestimmt und bereitgestellt wird.

Der Erfindung liegt die Aufgabe zu Grunde, ein Verfahren zum Betreiben eines Rückfahrassistenzsystems für ein Fahrzeug und ein Rückfahrassistenzsystem zu verbessern. Die Aufgabe wird erfindungsgemäß durch ein Verfahren mit den Merkmalen des Patentanspruchs 1 und ein Rückfahrassistenzsystem mit den Merkmalen des Patentanspruchs 9 gelöst. Vorteilhafte Ausgestaltungen der Erfindung ergeben sich aus den Unteransprüchen.

Insbesondere wird ein Verfahren zum Betreiben eines Rückfahrassistenzsystems für ein Fahrzeug zur Verfügung gestellt, wobei das Rückfahrassistenzsystem ein rückwärtiges Befahren einer bereits gefahrenen Trajektorie zumindest teilautomatisiert durchführt, wobei mittels einer Steuereinrichtung eine maximale Weglänge für das rückwärtige Befahren der bereits gefahrenen Trajektorie in Abhängigkeit eines für das rückwärtige Befahren der bereits gefahrenen Trajektorie zu erwartenden Fehlers bestimmt und bereitgestellt wird, wobei die maximale Weglänge diejenige Weglänge entlang der Trajektorie ist, bei der der zu erwartende Fehler einen vorgegebenen Fehlerschwellenwert überschreitet.

Ferner wird insbesondere ein Rückfahrassistenzsystem geschaffen, wobei das Rückfahrassistenzsystem ein rückwärtiges Befahren einer bereits gefahrenen Trajektorie zumindest teilautomatisiert durchführen kann, umfassend eine Steuereinrichtung, wobei die Steuereinrichtung dazu eingerichtet ist, eine maximale Weglänge für das rückwärtige Befahren der bereits gefahrenen Trajektorie in Abhängigkeit eines für das rückwärtige Befahren der bereits gefahrenen Trajektorie zu erwartenden Fehlers zu bestimmen und bereitzustellen, wobei die maximale Weglänge diejenige Weglänge entlang der Trajektorie ist, bei der ein zu erwartender Fehler einen vorgegebenen Fehlerschwellenwert überschreitet.

Das Verfahren und das Rückfahrassistenzsystem ermöglichen es, einem Nutzer des Rückfahrassistenzsystems eine Rückmeldung über eine maximale Weglänge zu geben, sodass der Nutzer das Rückfahrassistenzsystem bestmöglich für seine Zwecke einsetzen kann. Hierzu wird ein zu erwartender Fehler beim rückwärtigen Befahren der bereits gefahrenen Trajektorie mittels einer Steuereinrichtung bestimmt. Der zu erwartende Fehler wird hierbei insbesondere von einem Messfehler einer beim Erfassen der bereits gefahrenen Trajektorie verwendeten Sensorik, beispielsweise der Fahrzeugodometrie, hervorgerufen sowie von einem Fehler einer Aktorik, insbesondere einer Quer- und Längsführung des Fahrzeugs, die beim rückwärtigen Befahren der bereits gefahrenen Trajektorie eingesetzt wird. Die Erfindung basiert auf der Erkenntnis, dass beim rückwärtigen Befahren die aufgezeichnete bereits gefahrene Trajektorie nur zu einem gewissen Grad reproduziert werden kann, wobei sich ein Fehler, das heißt eine Abweichung von der vorwärts gefahrenen Trajektorie, bei der Rückwärtsfahrt ergibt. Bei dem Fehler handelt es sich insbesondere um eine laterale Abweichung von der vorwärts gefahrenen Trajektorie bei der Rückwärtsfahrt. Die laterale Abweichung beim Abfahren der Trajektorie ist entscheidend, da es bei einer zu großen Abweichung beispielsweise zu einer Kollision mit anderen Objekten (z.B. parkenden Fahrzeugen) neben der Trajektorie kommen kann.

Mit Hilfe des bestimmten zu erwartenden Fehlers wird eine maximale Weglänge bestimmt, wobei die maximale Weglänge diejenige Weglänge ist, bei der der zu erwartende Fehler während einer Rückwärtsfahrt entlang der Trajektorie einen vorgegebenen Fehlerschwellenwert überschreitet.

Ein Vorteil des Verfahrens und des Rückfahrassistenzsystems ist, dass ein Nutzer stets darüber informiert ist, wie weit eine bereits gefahrene Trajektorie teilautomatisiert oder automatisiert zurückgefahren werden kann. In komplexen Umgebungen kann ein Fahrzeug daher vom Nutzer nur soweit vorwärts gefahren werden, dass eine teilautomatisierte oder automatisierte Rückfahrt stets noch möglich ist. Dies steigert einen Komfort und eine Sicherheit des Nutzers beim Benutzen des Fahrzeugs.

Eine Trajektorie ist insbesondere eine (zeitlich und/oder logisch) geordnete Menge aus Messpunkten oder Tupeln, die jeweils zumindest einen Lenkwinkel und eine Geschwindigkeit des Fahrzeugs umfassen. Die Geschwindigkeit entlang der Trajektorie kann alternativ über Wertepaare bestehend aus Wegstrecke und Zeitstempel abgebildet werden, um die durchschnittliche Geschwindigkeit für einen Trajektorienabschnitt zu speichern.

Beim Bestimmen des zu erwartenden Fehlers können insbesondere die folgenden Fehlerquellen berücksichtigt werden: eine beim Aufzeichnen der Trajektorie verwendete Fahrzeugodometrie und/oder Messsensorik (insbesondere auch in Abhängigkeit eines jeweils verwendeten Messprinzips und/oder einer Geschwindigkeit des Fahrzeugs und/oder von jeweiligen Messbedingungen wie Temperatur, Witterung etc.), Fehler bei der Speicherung (z.B. aufgrund von Quantisierung etc.) und/oder Fehler, die beim rückwärtigen Befahren einer Aktorik zuzuordnen sind. Die Fehler und deren Abhängigkeiten können für die einzelnen Fehlerquellen insbesondere basierend auf empirischen Versuchen bestimmt werden.

Teile des Rückfahrassistenzsystems, insbesondere die Steuereinrichtung, können einzeln oder zusammengefasst als eine Kombination von Hardware und Software ausgebildet sein, beispielsweise als Programmcode, der auf einem Mikrocontroller oder Mikroprozessor ausgeführt wird.

Das Bereitstellen der bestimmten maximalen Weglänge kann beispielsweise das Ausgeben der maximalen Weglänge auf einer Anzeigeeinrichtung umfassen. Hierdurch kann die maximale Weglänge direkt einem Nutzer des Fahrzeugs mitgeteilt werden. Hierbei kann die maximale Weglänge beispielsweise als Zahlenwert, als Balkendiagramm und/oder als Harvey-Balls dargestellt werden. Auch das Darstellen einer auf die maximale Weglänge gekürzten Trajektorie, beispielsweise als Projektion in einer Straßenkarte (z.B. in der Navigationsdarstellung eines Navigationssystems) oder in einem Kamerabild (z.B. eines Rückfahrkamerasystems), kann erfolgen.

Ein Fahrzeug ist insbesondere ein Kraftfahrzeug. Ein Fahrzeug kann prinzipiell jedoch auch ein anderes Land-, Wasser-, Schienen, Luft- oder Raumfahrzeug sein.

In einer Ausführungsform ist vorgesehen, dass die rückwärtig befahrbare Weglänge auf die bestimmte maximale Weglänge begrenzt wird. Hierdurch kann bei Verwendung des Rückfahrassistenzsystems verhindert werden, dass die bereits gefahrene Trajektorie über einen tolerierbaren Fehler hinaus rückwärtig befahren wird. Hierdurch kann insbesondere eine Sicherheit beim Betreiben des Rückfahrassistenzsystems erhöht werden, da jederzeit eine vorgegebene maximale Abweichung von der bereits gefahrenen Trajektorie eingehalten wird.

Insbesondere kann vorgesehen sein, dass mittels der Steuereinrichtung das Einhalten der Begrenzung auf die maximale Weglänge überprüft wird. Insbesondere kann die Steuereinrichtung das Rückwärtsfahren abbrechen bzw. beenden, wenn ein Überprüfungsergebnis ergibt, dass die maximale Weglänge erreicht ist.

In einer Ausführungsform ist vorgesehen, dass zum Bestimmen des zu erwartenden Fehlers die bereits gefahrene Trajektorie jeweils formabhängig in Trajektorienabschnitte unterteilt wird, wobei zumindest ausgehend von einer jeweiligen Form der Trajektorienabschnitte und von einer Geschwindigkeit, mit der der jeweilige Trajektorienabschnitt in Vorwärtsrichtung abgefahren wurde, ein zu erwartender Fehler des jeweiligen Trajektorienabschnitts bestimmt wird, wobei der zu erwartende Fehler beim rückwärtigen Befahren der bereits gefahrenen Trajektorie in rückwärtiger Richtung aus den zu erwartenden Fehlern der Trajektorienabschnitte bestimmt wird. Hierdurch kann ein Fehler genauer, nämlich in Abhängigkeit einer Form der Trajektorie bzw. der Trajektorienabschnitte und einer Geschwindigkeit bzw. eines Geschwindigkeitsprofils, bestimmt werden. Der Vorgehensweise liegt die Erkenntnis zugrunde, dass eine Genauigkeit beim Nachfahren, insbesondere beim rückwärtigen Befahren, einer bereits gefahrenen Trajektorie maßgeblich von einer Form der Trajektorie bzw. einer Form von Trajektorienabschnitten und einer beim Aufzeichnen der bereits gefahrenen Trajektorie jeweils auf den Trajektorienabschnitten verwendeten Geschwindigkeit des Fahrzeugs abhängt. Anders ausgedrückt wird eine bereits gefahrene Trajektorie in Abhängigkeit der Form der Trajektorie und/oder der Form einzelner Trajektorienabschnitte in Trajektorienabschnitte unterteilt. Beispielsweise können hierbei gerade verlaufende Trajektorienabschnitte von gekrümmten bzw. kurvigen Trajektorienabschnitten unterschieden werden. Auch unterschiedliche Krümmungen bzw. Kurvenradien können voneinander unterschieden werden (z.B. Geradeausfahrt, verschiedene Klothoide, S-Schlagmanöver, 90°-Wende, 180°-Wende usw.). Für jeden der auf diese Weise erhaltenen Trajektorienabschnitte wird dann ein Fehler zumindest in Abhängigkeit der Form und der Geschwindigkeit, mit der dieser Trajektorienabschnitt abgefahren wurde, bestimmt, beispielsweise geschätzt. Zum Bestimmen des Gesamtfehlers werden die jeweils für die einzelnen Trajektorienabschnitte bestimmten Fehler kumuliert, beispielsweise können absolute Fehler bestimmt und gemäß den Gesetzen der Fehlerfortpflanzung aufsummiert werden. Dies erfolgt insbesondere ausgehend von einem Ende der bereits gefahrenen Trajektorie oder einer aktuellen Position des Fahrzeugs auf der bereits gefahrenen Trajektorie. Bei der Akkumulation wird dabei insbesondere berücksichtigt, dass sich der Gesamtfehler verringern kann, wenn die Bewegung entlang der Trajektorienabschnitte gegenläufig ist.

Die jeweils durch Einbeziehen eines weiteren voranstehenden Trajektorienabschnitts erhaltenen kumulierten Fehlerwerte werden mit dem vorgegebenen Fehlerschwellenwert verglichen. Ist der Fehlerschwellenwert überschritten, so wird insbesondere der im vorherigen Schritt betrachtete Trajektorienabschnitt als Referenz zum Bestimmen der maximalen Weglänge verwendet, sodass die maximale Weglänge die Weglängen aller in vorangegangenen Schritten berücksichtigten Trajektorienabschnitte umfasst.

In einer alternativen Ausführungsform ist vorgesehen, dass zum Bestimmen des zu erwartenden Fehlers die bereits gefahrene Trajektorie jeweils formabhängig in Trajektorienabschnitte unterteilt wird, wobei zumindest ausgehend von einer jeweiligen Form der Trajektorienabschnitte und von einer Geschwindigkeit, mit der der jeweilige Trajektorienabschnitt in Vorwärtsrichtung abgefahren wurde, eine Anzahl von den jeweiligen Trajektorienabschnitt repräsentierenden Messpunkten festgelegt ist oder festgelegt wird, wobei die maximale Weglänge und/oder der vorgegebene Fehlerschwellenwert in Form von einer maximalen Anzahl von Messpunkten vorgegeben ist oder vorgegeben wird. Das Vorgehen beim Unterteilen der bereits gefahrenen Trajektorie in einzelne Trajektorienabschnitte ist hierbei analog zu der voranstehend beschriebenen Ausführungsform. Jedoch werden die derart erhaltenen Trajektorienabschnitte jeweils durch eine festgelegte Anzahl von Messpunkten repräsentiert. Dies kann auch bereits während des Aufzeichnens der bereits gefahrenen Trajektorie erfolgen bzw. erfolgt sein. Beispielsweise kann eine Anzahl an erfassten und/oder aufgezeichneten Messpunkten (jeweils Tupel, gebildet aus zumindest einem Lenkwinkel und einer Geschwindigkeit) in Abhängigkeit eines Lenkwinkels und einer Geschwindigkeit (beim Aufzeichnen) festgelegt werden. Das Festlegen der Anzahl der den jeweiligen Trajektorienabschnitt repräsentierenden Messpunkte erfolgt ausgehend zumindest von einer jeweiligen Form der Trajektorienabschnitte und von einer Geschwindigkeit, mit der der jeweilige Trajektorienabschnitt in Vorwärtsrichtung abgefahren wurde. Hierbei erfolgt dies insbesondere derart, dass eine Anzahl von Messpunkten umso größer ist, je größer eine Komplexität des jeweils betrachteten Trajektorienabschnitts ist. So kann ein gerade verlaufender Trajektorienabschnitt bereits durch zwei Messpunkte ausreichend detailliert repräsentiert werden, wohingegen ein kurviger Trajektorienabschnitt mit einem sehr kleinen Kurvenradius eine größere Anzahl an Messpunkten zur ausreichenden Repräsentation benötigt. Eine maximale Weglänge und/oder der vorgegebene Fehlerschwellenwert wird hierbei insbesondere dadurch definiert, dass eine maximale Anzahl an Messpunkten festgelegt ist oder festgelegt wird. Hierbei liegt dem Vorgehen insbesondere der Gedanke zugrunde, dass die Anzahl von Messpunkten, mit denen jeder Trajektorienabschnitt repräsentiert wird, derart gewählt wird oder gewählt ist, dass ein Fehlerbeitrag pro Messpunkt in etwa konstant gehalten werden kann. Je komplexer ein Trajektorienabschnitt hierbei ist, desto größer ist die Anzahl der Messpunkte und daher auch der jeweilige Fehlerbeitrag des Trajektorienabschnitts zu einem Gesamtfehler beim rückwärtigen Befahren der bereits gefahrenen Trajektorie. Durch das Vorgeben einer maximalen Anzahl von Messpunkten kann der maximale Fehler beschränkt werden. Über die vorgegebene Anzahl und die jeweilige Anzahl von Messpunkten für jeden Trajektorienabschnitt kann dann die maximale Weglänge bestimmt werden. Die maximale Weglänge ist dann insbesondere diejenige Weglänge, bei der eine Anzahl von Messpunkten die maximale Anzahl an Messpunkten überschreitet.

In einer Ausführungsform ist vorgesehen, dass zum Bestimmen der zu erwartenden Fehler der Trajektorienabschnitte oder der Anzahl der Messpunkte Werte für die jeweils zu erwartenden Fehler in Abhängigkeit der jeweils bestimmten Form und der jeweiligen Geschwindigkeit aus einer Tabelle abgefragt werden. Hierdurch können die jeweiligen Fehler für verschiedene Kombinationen aus Form und Geschwindigkeit schnell bestimmt werden. Die Einträge einer solchen Tabelle können beispielsweise empirisch für verschiedene Kombinationen aus Form (z.B. für Kurven mit unterschiedlichen Kurvenradien) und Geschwindigkeit bestimmt werden. Die empirisch bestimmte Tabelle wird dann in einem Speicher der Steuereinrichtung hinterlegt, sodass die Steuereinrichtung bei Anwendung des Verfahrens auf diese zugreifen kann.

In einer Ausführungsform ist vorgesehen, dass zum Bestimmen einer Form der Trajektorienabschnitte eine Klassifizierung und/oder Mustererkennung durchgeführt wird. Hierdurch können Fehler auch für unbekannte Formen geschätzt werden. Ein Trajektorienabschnitt wird dann insbesondere nach verschiedenen Formklassen klassifiziert. Ausgehend von der jeweils zugeordneten Formklasse kann dann der Fehler bestimmt bzw. abgeschätzt werden. Dies erfolgt beispielsweise mittels einer Klassifikationseinrichtung. Hierbei können beispielsweise auch Verfahren des Maschinenlernens und der Künstlichen Intelligenz zur Anwendung kommen.

In einer Ausführungsform ist vorgesehen, dass in Abhängigkeit einer noch verbleibenden Speicherkapazität eines Speichers, in dem die bereits gefahrene Trajektorie abgespeichert ist oder abgespeichert wird, eine maximal noch speicherbare Weglänge bestimmt und ausgegeben wird. Hierdurch erhält ein Nutzer des Rückfahrassistenzsystem zusätzlich eine Information darüber, wie lang die bereits gefahrene Trajektorie noch sein darf, damit diese mittels des Rückfahrassistenzsystems teilautomatisiert oder automatisiert noch rückwärtig befahren werden kann. Ein Komfort und eine Sicherheit beim Betreiben des Rückfahrassistenzsystems kann hierdurch weiter gesteigert werden.

In einer Ausführungsform ist vorgesehen, dass ein Startpunkt auf der bereits gefahrenen Trajektorie festgelegt werden kann oder festgelegt wird, wobei nach Festlegen des Startpunkts eine Weglänge von einer aktuellen Position des Fahrzeugs auf der bereits gefahrenen Trajektorie bis zum festgelegten Startpunkt bestimmt wird, wobei die bestimmte Weglänge mit der bestimmten maximalen Weglänge verglichen wird, und wobei eine Warnmeldung erzeugt und ausgegeben wird, wenn die bestimmte Weglänge größer als die maximale Weglänge ist. Hierdurch kann der Nutzer des Rückfahrassistenzsystems gewarnt werden, wenn die bereits gefahrene Trajektorie nicht mehr vollständig bis zum festgelegten Startpunkt rückwärtig gefahren werden kann ("point of no return"). Dies ist insbesondere in anspruchsvollen Fahrsituationen von Vorteil (z.B. sehr enger Parkplatz, mangelnde Wendemöglichkeit etc.). Die Warnmeldung kann optisch, akustisch und/oder haptisch erfolgen. Zusätzlich kann vorgesehen sein, dass der festgelegte Startpunkt in einer Anzeigeeinrichtung (z.B. Navigationsdarstellung des Navigationssystems) dargestellt wird. Die Warnmeldung kann alternativ als eine Hinweisnachricht ausgeführt werden, um einen Nutzer des Fahrzeugs auf die Möglichkeit der Nutzung des Rückfahrassistenzsystems aufmerksam zu machen.

In einer Ausführungsform ist vorgesehen, dass nach Beginn einer Aufzeichnung der bereits gefahrenen Trajektorie eine bereits gefahrene Weglänge bestimmt wird, wobei eine Differenz zwischen der bestimmten maximalen Weglänge und der bereits gefahrenen Weglänge bestimmt und ausgegeben wird. Hierbei kann insbesondere eine noch verbleibende Weglänge ausgehend von einem verbleibenden Fehler bis zum vorgegebenen Fehlerschwellenwert abgeschätzt werden. Hierzu wird beispielsweise ein rückwärtig berechneter Fehler der bereits gefahrenen Trajektorie in voranstehend beschriebener Weise berechnet. Aus einer Differenz zwischen dem berechneten Fehler und dem vorgegebenen Fehlerschwellenwert kann die Differenz zwischen der bestimmten maximalen Weglänge und der bereits gefahrenen Weglänge geschätzt werden.

In einer Ausführungsform ist vorgesehen, dass nach Beginn einer Aufzeichnung der bereits gefahrenen Trajektorie eine bereits gefahrene Weglänge bestimmt und ausgegeben wird.

Es kann vorgesehen sein, dass Situationen erkannt werden, in denen das Rückfahrassistenzsystem eingesetzt werden kann, wobei eine Hinweisnachricht erzeugt und ausgegeben wird, um einen Nutzer des Fahrzeugs auf die Möglichkeit der Nutzung des Rückfahrassistenzsystems aufmerksam zu machen. Das Erkennen der Situation kann beispielsweise mittels der Steuereinrichtung oder alternativ oder zusätzlich auch mittels einer Umfeldwahrnehmung und/oder Umfelderkennung, insbesondere mittels einer Umfelderkennungseinrichtung, erfolgen. Alternativ oder zusätzlich kann die Situation auch auf Grundlage von Kartendaten, beispielsweise in Abhängigkeit einer Fahrzeugposition, erkannt werden (mit Kartendaten z.B. von einem Navigationssystem, von einem Backendserver, auf Grundlage von Schwarmdaten/Nutzungsprofilen anderer Nutzer etc.). Hierbei können beispielsweise die folgenden Situationen erkannt werden: Sackgassen ohne Wendemöglichkeit, enge Parkplätze oder Parkhäuser.

In eine Ausführungsform ist vorgesehen, dass ein Startpunkt auf der bereits gefahrenen Trajektorie festgelegt wird, wenn eine Situation erkannt wird, in der das Rückfahrassistenzsystem eingesetzt werden kann. Das Festlegen erfolgt insbesondere mittels der Steuereinrichtung.

Eine Situation wird beispielsweise erkannt, wenn sich das Fahrzeug basierend auf den Kartendaten in einer Sackgasse befindet oder von einem öffentlichem Verkehrsraum auf ein privates Gelände (z.B. Privatgrundstück, Parkplatz, Parkhaus) gefahren wird und mittels der Steuereinrichtung und/oder der Umfelderkennungseinrichtung eine Engstelle detektiert wurde. Eine Engstelle kann dabei über eine hinterlegte Breite und Länge vorgegeben sein. Der Beginn der Sackgasse oder der Übergang vom öffentlichen Verkehrsraum auf ein privates Gelände kann dabei zusätzlich automatisch als Startpunkt festgelegt werden.

Die Ausgabe der Hinweisnachricht kann dabei an den Fahrer erfolgen, sobald der Rückwärtsgang eingelegt wird oder die Weglänge von der aktuellen Position des Fahrzeugs auf der bereits gefahrenen Trajektorie bis zum automatisch festgelegten Startpunkt größer als die maximale Weglänge ist. Die Ausgabe der Hinweisnachricht kann dabei akustisch, optisch und/oder haptisch erfolgen, z.B. durch Ausgabe einer Nachricht und/oder Hervorheben der Aktivierungsmöglichkeit des Rückfahrassistenzsystems.

Weitere Merkmale zur Ausgestaltung des Rückfahrassistenzsystems ergeben sich aus der Beschreibung von Ausgestaltungen des Verfahrens. Die Vorteile des Rückfahrassistenzsystems sind hierbei jeweils die gleichen wie bei den Ausgestaltungen des Verfahrens.

Weiter wird insbesondere auch ein Fahrzeug geschaffen, umfassend mindestens ein Rückassistenzsystem gemäß einer der beschriebenen Ausführungsformen.

Nachfolgend wird die Erfindung anhand bevorzugter Ausführungsbeispiele unter Bezugnahme auf die Figuren näher erläutert. Hierbei zeigen:
- Fig. 1: eine schematische Darstellung einer Ausführungsform des Rückfahrassistenzsystems;
- Fig. 2: ein schematisches Ablaufdiagramm einer Ausführungsform des Verfahrens zum Betreiben eines Rückfahrassistenzsystems für ein Fahrzeug;
- Fig. 3: ein schematisches Ablaufdiagramm einer weiteren Ausführungsform des Verfahrens zum Betreiben eines Rückfahrassistenzsystems für ein Fahrzeug.

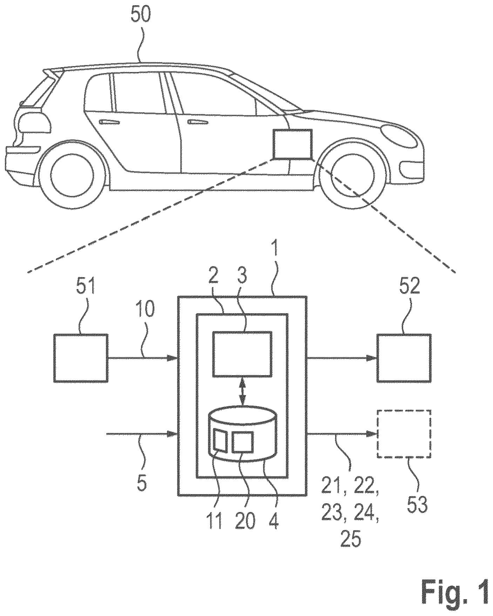

In Fig. 1 ist eine schematische Darstellung einer Ausführungsform des Rückfahrassistenzsystems 1 gezeigt. Das Rückfahrassistenzsystem 1 ist in einem Fahrzeug 50 angeordnet. Das Rückfahrassistenzsystem 1 ermöglicht ein rückwärtiges Befahren einer bereits gefahrenen Trajektorie 20. Beispielsweise kann das Aufzeichnen der Trajektorie 20 manuell oder automatisch gestartet werden, wenn das Fahrzeug 50 eine Geschwindigkeit unterhalb von beispielsweise 35 km/h aufweist. Beispielsweise kann eine Trajektorie 20 mit einer Länge von 50 Metern aufgezeichnet werden. Zum Aufzeichnen der Trajektorie 20 werden Sensordaten 10 einer Sensorik 51 des Fahrzeugs 50 erfasst und aufgezeichnet. Die Sensorik 51 erfasst insbesondere zumindest einen Lenkwinkel und eine Geschwindigkeit des Fahrzeugs 50. Es kann hierbei vorgesehen sein, dass auch Steuerdaten einer Aktorik 52 des Fahrzeugs 50, beispielsweise von einer Längs- und Quersteuerung, aufgezeichnet werden. Ferner können auch weitere Daten beim Abfahren der Trajektorie 20 aufgezeichnet werden, wie z.B. Positionsdaten des Fahrzeugs, Steuerdaten einer Aktorik und/oder Sensordaten von Sensoren des Fahrzeugs.

Das Rückfahrassistenzsystem 1 umfasst eine Steuereinrichtung 2. Die Steuereinrichtung 2 umfasst eine Recheneinrichtung 3 und einen Speicher 4. Die aufgezeichnete bereits gefahrene Trajektorie 20 ist in dem Speicher 4 hinterlegt. Zum rückwärtigen Befahren der bereits gefahrenen Trajektorie 20 steuert die Steuereinrichtung 2 die Aktorik 52 des Fahrzeugs 50 entsprechend an.

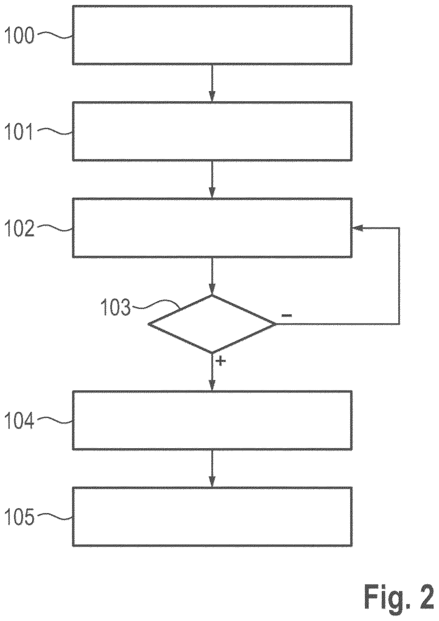

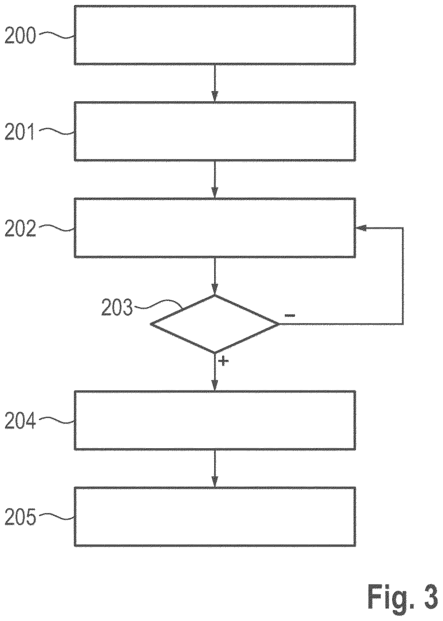

Die Steuereinrichtung 2 ist dazu eingerichtet, eine maximale Weglänge 21 für das rückwärtige Befahren der bereits gefahrenen Trajektorie 20 in Abhängigkeit eines für das rückwärtige Befahren der bereits gefahrenen Trajektorie 20 zu erwartenden Fehlers zu bestimmen und bereitzustellen. Hierbei ist die maximale Weglänge 21 diejenige Weglänge, bei der ein zu erwartender Fehler einen vorgegebenen Fehlerschwellenwert 5 überschreitet. Der Fehlerschwellenwert 5 wird dem Rückfahrassistenzsystem 1 von außen zugeführt oder ist alternativ bereits im Speicher 4 der Steuereinrichtung 2 hinterlegt. Das Bestimmen der maximalen Weglänge erfolgt insbesondere gemäß einer der mit Bezug auf die Figuren 2 und 3 beschriebenen Ausführungsformen.

Die bestimmte maximale Weglänge 21 wird anschließend beispielsweise auf einer Anzeigeeinrichtung 53 des Fahrzeugs 50 ausgegeben, sodass ein Nutzer diese erfassen kann.

Es kann vorgesehen sein, dass die rückwärtig befahrbare Weglänge auf die bestimmte maximale Weglänge 21 begrenzt wird. Hierzu wird die bereits gefahrene Trajektorie 20 beim rückwärtigen Befahren nur bis zur bestimmten maximalen Weglänge 21 abgefahren.

Es kann vorgesehen sein, dass in Abhängigkeit einer noch verbleibenden Speicherkapazität des Speichers 4, in dem die bereits gefahrene Trajektorie 20 abgespeichert ist oder abgespeichert wird, mittels der Steuereinrichtung 2 eine maximal noch speicherbare Weglänge 22 bestimmt und ausgegeben wird. Die noch speicherbare Weglänge 22 kann beispielsweise auf der Anzeigeeinrichtung 53 des Fahrzeugs 50 ausgegeben werden.

Es kann vorgesehen sein, dass ein Startpunkt 11 auf der bereits gefahrenen Trajektorie 20 festgelegt werden kann oder festgelegt wird, wobei nach Festlegen des Startpunkts 11 eine Weglänge von einer aktuellen Position des Fahrzeugs 50 auf der bereits gefahrenen Trajektorie 20 bis zum festgelegten Startpunkt 11 mittels der Steuereinrichtung 2 bestimmt wird, wobei die bestimmte Weglänge mit der bestimmten maximalen Weglänge 21 verglichen wird, und wobei eine Warnmeldung 23 erzeugt und ausgegeben wird, wenn die bestimmte Weglänge größer als die maximale Weglänge 21 ist.

Es kann vorgesehen sein, dass ein Startpunkt 11 auf der bereits gefahrenen Trajektorie 20 festgelegt wird, wenn eine Situation erkannt wird, in der das Rückfahrassistenzsystem 1 eingesetzt werden kann.

Es kann vorgesehen sein, dass nach Beginn einer Aufzeichnung der bereits gefahrenen Trajektorie 20 eine bereits gefahrene Weglänge 24 mittels der Steuereinrichtung 2 bestimmt wird, wobei eine Differenz 25 zwischen der bestimmten maximalen Weglänge 21 und der bereits gefahrenen Weglänge 22 bestimmt und ausgegeben wird.

Es kann auch vorgesehen sein, dass nach Beginn einer Aufzeichnung der bereits gefahrenen Trajektorie 20 eine bereits gefahrene Weglänge 24 bestimmt und ausgegeben wird.

Es kann vorgesehen sein, dass die bereits gefahrene Trajektorie 20 und/oder die maximale Weglänge 21 und/oder die maximal noch speicherbare Weglänge 22 und/oder die bereits gefahrene Weglänge 24 und/oder die Differenz 25 grafisch aufbereitet auf der Anzeigeeinrichtung 53 ausgegeben werden, sodass ein Nutzer diese leichter erfassen kann. Hierbei können zur Darstellung Zahlenangaben und/oder Balkendiagramme und/oder Harvey-Balls verwendet werden.

In Fig. 2 ist ein schematisches Ablaufdiagramm einer Ausführungsform des Verfahrens zum Betreiben eines Rückfahrassistenzsystems für ein Fahrzeug gezeigt.

Ausgangspunkt des Verfahrens ist, dass eine bereits gefahrene Trajektorie aufgezeichnet wurde. Das Aufzeichnen kann hierbei auch selbst Teil des Verfahrens sein.

In einem Verfahrensschritt 100 wird die bereits gefahrene Trajektorie in Trajektorienabschnitte unterteilt. Dies erfolgt in Abhängigkeit einer Form der jeweiligen Trajektorienabschnitte und einer Geschwindigkeit, mit der die Trajektorienabschnitte jeweils absolviert wurden.

Es kann hierbei vorgesehen sein, dass zum Bestimmen der Form der Trajektorienabschnitte eine Klassifizierung und/oder Mustererkennung durchgeführt wird. Hierbei können Verfahren des Maschinenlernens und der Künstlichen Intelligenz zum Einsatz kommen. Das Ergebnis ist beispielsweise eine Klassifizierung in unterschiedliche Klassen von Kombinationen von einer Form und einer Geschwindigkeit. Die Form umfasst beispielsweise unterschiedliche Krümmungen bzw. Kurvenradien der Trajektorienabschnitte (z.B. Geradesausfahrt, verschiedene Klothoide, S-Schlagmanöver, 90°-Wende, 180°-Wende usw.).

In einem Verfahrensschritt 101 wird für jeden Trajektorienabschnitt ein zu erwartender Fehler bestimmt. Hierbei ist insbesondere vorgesehen, dass zum Bestimmen der zu erwartenden Fehler der Trajektorienabschnitte Werte für die jeweils zu erwartenden Fehler in Abhängigkeit der jeweils bestimmten Form und der jeweiligen Geschwindigkeit aus einer Tabelle abgefragt werden. Die Tabelle wurde bereits vorher bestimmt, beispielsweise auf Grundlage von empirischen Versuchen. Die Tabelle ist beispielsweise in einem Speicher einer Steuereinrichtung des Rückfahrassistenzsystems hinterlegt. Für jede Kombination aus Form und Geschwindigkeit kann die Steuereinrichtung des Rückfahrassistenzsystems dann einen zugehörigen beim rückwärtigen Befahren des betrachteten Trajektorienabschnitts zu erwartenden Fehler aus der Tabelle abrufen.

In einem Verfahrensschritt 102 werden die jeweils bestimmten Fehler der Trajektorienabschnitte schrittweise mittels Verfahren der Fehlerfortpflanzung aufkumuliert, sodass ein Gesamtfehler bestimmt werden kann. Beispielsweise können hierzu absolute Fehler gemäß den Gesetzen der Fehlerfortpflanzung aufsummiert werden. Dies erfolgt ausgehend von einem Ende der bereits gefahrenen Trajektorie.

Nach jedem weiteren Trajektorienabschnitt, der hinzugefügt wird, wird in einem Verfahrensschritt 103 überprüft, ob der bestimmte zu erwartende (Gesamt-)Fehler einen vorgegeben Fehlerschwellenwert überschreitet oder nicht. Überschreitet der zu erwartende Fehler den vorgegebenen Fehlerschwellenwert nicht, so wird Verfahrensschritt 102 wiederholt und ein weiterer Trajektorienabschnitt hinzugefügt.

Überschreitet der zu erwartende Fehler hingegen den vorgegebenen Fehlerschwellenwert, so wird in einem Verfahrensschritt 104 eine maximale Weglänge für das rückwärtige Befahren der bereits gefahrenen Trajektorie bestimmt. Hierbei kann beispielsweise vorgesehen sein, die Weglängen der bereits hinzugefügten Trajektorienabschnitte aufzusummieren und als maximale Weglänge bereitzustellen. Alternativ kann auch vorgesehen sein, dass der letzte hinzugefügte Trajektorienabschnitt beim Bestimmen der maximalen Weglänge nicht mit berücksichtigt wird, da nach bzw. durch Hinzufügen dieses Trajektorienabschnitts der vorgegebene Fehlerschwellenwert überschritten wurde.

In einem Verfahrensschritt 105 wird die bestimmte maximale Weglänge ausgegeben, beispielsweise auf einer Anzeigeeinrichtung des Fahrzeugs. Es kann ferner vorgesehen sein, dass die rückwärtig befahrbare Weglänge auf die bestimmte maximale Weglänge begrenzt wird.

In Fig. 3 ist ein schematisches Ablaufdiagramm einer Ausführungsform des Verfahrens zum Betreiben eines Rückfahrassistenzsystems für ein Fahrzeug gezeigt.

Ausgangspunkt des Verfahrens ist, dass eine bereits gefahrene Trajektorie aufgezeichnet wurde. Das Aufzeichnen kann hierbei auch selbst Teil des Verfahrens sein.

In einem Verfahrensschritt 200 wird die bereits gefahrene Trajektorie in Trajektorienabschnitte unterteilt. Dies erfolgt in Abhängigkeit einer Form der jeweiligen Trajektorienabschnitte und einer Geschwindigkeit, mit der die Trajektorienabschnitte jeweils absolviert wurden.

Es kann hierbei vorgesehen sein, dass zum Bestimmen der Form der Trajektorienabschnitte eine Klassifizierung und/oder Mustererkennung durchgeführt wird. Hierbei können Verfahren des Maschinenlernens und der Künstlichen Intelligenz zum Einsatz kommen. Das Ergebnis ist beispielsweise eine Klassifizierung in unterschiedliche Klassen von Kombinationen von einer Form und einer Geschwindigkeit. Die Form umfasst beispielsweise unterschiedliche Krümmungen bzw. Kurvenradien der Trajektorienabschnitte (z.B. Geradesausfahrt, verschiedene Klothoide, S-Schlagmanöver, 90°-Wende, 180°-Wende usw.).

In einem Verfahrensschritt 201 wird eine Anzahl von den jeweiligen Trajektorienabschnitt repräsentierenden Messpunkten festgelegt. Dies erfolgt in Abhängigkeit zumindest von einer jeweiligen Form der Trajektorienabschnitte und von einer Geschwindigkeit, mit der der jeweilige Trajektorienabschnitt in Vorwärtsrichtung abgefahren wurde. Hierbei ist insbesondere vorgesehen, dass zum Bestimmen der Anzahl der Messpunkte Werte für die Anzahl in Abhängigkeit der jeweils bestimmten Form und der jeweiligen Geschwindigkeit aus einer Tabelle abgefragt werden. Die Tabelle wurde bereits vorher bestimmt, beispielsweise auf Grundlage von empirischen Versuchen. Die Tabelle ist beispielsweise in einem Speicher einer Steuereinrichtung des Rückfahrassistenzsystems hinterlegt. Für jede Kombination aus Form und Geschwindigkeit kann die Steuereinrichtung des Rückfahrassistenzsystems dann eine zugehörige beim rückwärtigen Befahren des betrachteten Trajektorienabschnitts notwendige Anzahl von Messpunkten aus der Tabelle abrufen. Hierbei wird davon ausgegangen, dass jeder Messpunkt in etwa den gleichen Beitrag zu einem Gesamtfehler leistet.

In einem Verfahrensschritt 202 werden die jeweils festgelegten Anzahlen von Messpunkten der Trajektorienabschnitte schrittweise aufsummiert, sodass eine Gesamtanzahl von Messpunkten bestimmt werden kann. Dies erfolgt ausgehend von einem Ende der bereits gefahrenen Trajektorie.

Nach jedem weiteren Trajektorienabschnitt, der hinzugefügt wird, wird in einem Verfahrensschritt 203 überprüft, ob die bestimmte Anzahl an Messpunkten eine vorgegebene maximale Anzahl von Messpunkten überschreitet oder nicht. Die vorgegebene maximale Anzahl von Messpunkten ist hierbei insbesondere äquivalent mit einem vorgegebenen Fehlerschwellenwert. Überschreitet die bestimmte Anzahl an Messpunkten die vorgegebene maximale Anzahl nicht, so wird Verfahrensschritt 202 wiederholt und ein weiterer Trajektorienabschnitt hinzugefügt.

Überschreitet die bestimmte Anzahl die vorgegebene maximale Anzahl nicht, so wird in einem Verfahrensschritt 204 eine maximale Weglänge für das rückwärtige Befahren der bereits gefahrenen Trajektorie bestimmt. Hierbei kann beispielsweise vorgesehen sein, die Weglängen der bereits hinzugefügten Trajektorienabschnitte aufzusummieren und als maximale Weglänge bereitzustellen. Alternativ kann auch vorgesehen sein, dass der letzte hinzugefügte Trajektorienabschnitt beim Bestimmen der maximalen Weglänge nicht mit berücksichtigt wird, da nach bzw. durch Hinzufügen dieses Trajektorienabschnitts die vorgegebene maximale Anzahl an Messpunkten überschritten wurde.

In einem Verfahrensschritt 205 wird die bestimmte maximale Weglänge ausgegeben, beispielsweise auf einer Anzeigeeinrichtung des Fahrzeugs. Es kann ferner vorgesehen sein, dass die rückwärtig befahrbare Weglänge auf die bestimmte maximale Weglänge begrenzt wird.

### Bezugszeichenliste

- 1: Rückfahrassistenzsystem
- 2: Steuereinrichtung
- 3: Speicher
- 4: Recheneinrichtung
- 5: Fehlerschwellenwert
- 10: Sensordaten
- 11: Startpunkt
- 20: bereits gefahrene Trajektorie
- 21: maximale Weglänge
- 22: noch speicherbare Weglänge
- 23: Warnmeldung
- 24: bereits gefahrene Weglänge
- 25: Differenz
- 50: Fahrzeug
- 51: Sensorik
- 52: Aktorik
- 53: Anzeigeeinrichtung
- 100-105: Verfahrensschritte
- 200-205: Verfahrensschritte

## Patentansprüche

1. Verfahren zum Betreiben eines Rückfahrassistenzsystems (1) für ein Fahrzeug (50), wobei das Rückfahrassistenzsystem (1) ein rückwärtiges Befahren einer bereits gefahrenen Trajektorie (20) zumindest teilautomatisiert durchführt,
wobei mittels einer Steuereinrichtung (2) eine maximale Weglänge (21) für das rückwärtige Befahren der bereits gefahrenen Trajektorie (20) in Abhängigkeit eines für das rückwärtige Befahren der bereits gefahrenen Trajektorie (20) zu erwartenden Fehlers bestimmt und bereitgestellt wird, wobei die maximale Weglänge (21) diejenige Weglänge entlang der Trajektorie (20) ist, bei der der zu erwartende Fehler einen vorgegebenen Fehlerschwellenwert (5) überschreitet.

2. Verfahren nach Anspruch 1, **dadurch gekennzeichnet, dass** die rückwärtig befahrbare Weglänge auf die bestimmte maximale Weglänge (21) begrenzt wird.

3. Verfahren nach Anspruch 1 oder 2, **dadurch gekennzeichnet, dass** zum Bestimmen des zu erwartenden Fehlers die bereits gefahrene Trajektorie (20) jeweils formabhängig in Trajektorienabschnitte unterteilt wird, wobei zumindest ausgehend von einer jeweiligen Form der Trajektorienabschnitte und von einer Geschwindigkeit, mit der der jeweilige Trajektorienabschnitt in Vorwärtsrichtung abgefahren wurde, ein zu erwartender Fehler des jeweiligen Trajektorienabschnitts bestimmt wird, wobei der zu erwartende Fehler beim rückwärtigen Befahren der bereits gefahrenen Trajektorie (20) in rückwärtiger Richtung aus den zu erwartenden Fehlern der Trajektorienabschnitte bestimmt wird.

4. Verfahren nach Anspruch 1 oder 2, **dadurch gekennzeichnet, dass** zum Bestimmen des zu erwartenden Fehlers die bereits gefahrene Trajektorie (20) jeweils formabhängig in Trajektorienabschnitte unterteilt wird, wobei zumindest ausgehend von einer jeweiligen Form der Trajektorienabschnitte und von einer Geschwindigkeit, mit der der jeweilige Trajektorienabschnitt in Vorwärtsrichtung abgefahren wurde, eine Anzahl von den jeweiligen Trajektorienabschnitt repräsentierenden Messpunkten festgelegt ist oder festgelegt wird, wobei die maximale Weglänge (21) und/oder der vorgegebene Fehlerschwellenwert (5) in Form von einer maximalen Anzahl von Messpunkten vorgegeben ist oder vorgegeben wird.

5. Verfahren nach Anspruch 3 oder 4, **dadurch gekennzeichnet, dass** zum Bestimmen der zu erwartenden Fehler der Trajektorienabschnitte oder der Anzahl der Messpunkte Werte für die jeweils zu erwartenden Fehler in Abhängigkeit der jeweils bestimmten Form und der jeweiligen Geschwindigkeit aus einer Tabelle abgefragt werden.

6. Verfahren nach einem der vorangegangenen Ansprüche, **dadurch gekennzeichnet, dass** in Abhängigkeit einer noch verbleibenden Speicherkapazität eines Speichers (3), in dem die bereits gefahrene Trajektorie (20) abgespeichert ist oder abgespeichert wird, eine maximal noch speicherbare Weglänge (22) bestimmt und ausgegeben wird.

7. Verfahren nach einem der vorangegangenen Ansprüche, **dadurch gekennzeichnet, dass** ein Startpunkt (11) auf der bereits gefahrenen Trajektorie (20) festgelegt werden kann oder festgelegt wird, wobei nach Festlegen des Startpunkts (11) eine Weglänge von einer aktuellen Position des Fahrzeugs (50) auf der bereits gefahrenen Trajektorie (20) bis zum festgelegten Startpunkt (11) bestimmt wird, wobei die bestimmte Weglänge mit der bestimmten maximalen Weglänge (20) verglichen wird, und wobei eine Warnmeldung (23) erzeugt und ausgegeben wird, wenn die bestimmte Weglänge größer als die maximale Weglänge (21) ist.

8. Verfahren nach einem der vorangegangenen Ansprüche, **dadurch gekennzeichnet, dass** ein Startpunkt (11) auf der bereits gefahrenen Trajektorie (20) festgelegt wird, wenn eine Situation erkannt wird, in der das Rückfahrassistenzsystem (1) eingesetzt werden kann.

9. Rückfahrassistenzsystem (1), wobei das Rückfahrassistenzsystem (1) ein rückwärtiges Befahren einer bereits gefahrenen Trajektorie (20) zumindest teilautomatisiert durchführen kann, umfassend:
eine Steuereinrichtung (2), wobei die Steuereinrichtung (2) dazu eingerichtet ist, eine maximale Weglänge (21) für das rückwärtige Befahren der bereits gefahrenen Trajektorie (20) in Abhängigkeit eines für das rückwärtige Befahren der bereits gefahrenen Trajektorie (20) zu erwartenden Fehlers zu bestimmen und bereitzustellen, wobei die maximale Weglänge (21) diejenige Weglänge entlang der Trajektorie (20) ist, bei der ein zu erwartender Fehler einen vorgegebenen Fehlerschwellenwert (5) überschreitet.

10. Fahrzeug, umfassend mindestens ein Rückassistenzsystem gemäß Anspruch 9.

## Claims

1. A method for operating a reversing assistance system (1) for a vehicle (50), wherein the reversing assistance system (1) carries out travel in reverse along a previously traversed trajectory (20) in an at least semi-automated manner and, by means of a control unit (2), a maximum path length (21) for the travel in reverse along the previously traveled trajectory (20) is determined and provided depending on an expected error for the travel in reverse along the previously traveled trajectory (20), wherein the maximum path length (21) is the path length along the trajectory (20) at which the expected error exceeds a predefined error threshold (5).

2. The method as claimed in claim 1, **characterized in that** the path length that can be traversed in reverse is limited to the determined maximum path length (21).

3. The method as claimed in claim 1 or 2, **characterized in that**, in order to determine the expected error, the previously traveled trajectory (20) is subdivided, depending on shape, into trajectory sections, wherein at least proceeding from a particular shape of the trajectory sections and from a speed at which the particular trajectory section was traversed in the forward direction, an expected error of the particular trajectory section is determined, wherein the expected error is determined from the expected errors of the trajectory sections during the travel along the previously traveled trajectory (20) in reverse.

4. The method as claimed in claim 1 or 2, **characterized in that**, in order to determine the expected error, the previously traveled trajectory (20) is subdivided, depending on shape, into trajectory sections, wherein at least proceeding from a particular shape of the trajectory sections and from a speed at which the particular trajectory section was traversed in the forward direction, a number of measuring points representing the trajectory section is or will be determined, wherein the maximum path length (21) and/or the predefined error threshold (5) is or will be predefined in the form of a maximum number of measuring points.

5. The method as claimed in claim 3 or 4, **characterized in that**, in order to determine the expected error of the trajectory sections or the number of measuring points, values for the expected errors are retrieved from a table depending on the determined shape and the speed.

6. The method as claimed in one of the preceding claims, **characterized in that** a maximum storable path length (22) is determined and output depending on a remaining storage capacity of a memory (3) in which the previously traveled trajectory (20) is or will be stored.

7. The method as claimed in one of the preceding claims, **characterized in that** a start point (11) can be or will be established on the previously traveled trajectory (20) and, once the start point (11) has been established, a path length from a current position of the vehicle (50) on the previously traveled trajectory (20) to the established start point (11) can be determined, wherein the determined path length is compared with the determined maximum path length (20), and wherein a warning message (23) is generated and output when the determined path length is greater than the maximum path length (21).

8. The method as claimed in one of the preceding claims, **characterized in that** a start point (11) is established on the previously traveled trajectory (20) when a situation is identified, in which the reversing assistance system (1) can be used.

9. A reversing assistance system (1), wherein the reversing assistance system (1) can implement travel in reverse along a previously traveled trajectory (20) in an at least semi-automated manner, including:
a control unit (2), wherein the control unit (2) is configured to determine and provide a maximum path length (21) for the travel in reverse along the previously traveled trajectory (20) depending on an expected error for the travel in reverse along the previously traveled trajectory (20), wherein the maximum path length (21) is the path length along the trajectory (20) at which an expected error exceeds a predefined error threshold (5).

10. A vehicle, including at least one reversing assistance system as claimed in claim 9.

## Revendications

1. Procédé permettant de faire fonctionner un système d'assistance à la marche arrière (1) pour un véhicule (50), dans lequel le système d'assistance à la marche arrière (1) effectue de manière au moins partiellement automatisée une marche arrière sur une trajectoire (20) déjà parcourue, dans lequel un dispositif de commande (2) détermine et fournit une longueur de trajet maximale (21) pour la marche arrière sur la trajectoire (20) déjà parcourue en fonction d'une erreur attendue pour la marche arrière sur la trajectoire (20) déjà parcourue, dans lequel la longueur de trajet maximale (21) est la longueur de trajet le long de la trajectoire (20) à laquelle l'erreur attendue dépasse une valeur seuil d'erreur (5) prédéfinie.

2. Procédé selon la revendication 1, **caractérisé en ce que** la longueur de trajet pouvant être parcourue en marche arrière est limitée à la longueur de trajet maximale (21) déterminée.

3. Procédé selon la revendication 1 ou 2, **caractérisé en ce que** pour la détermination de l'erreur attendue, la trajectoire (20) déjà parcourue est divisée en sections de trajectoire respectivement en fonction de la forme, dans lequel une erreur attendue de la section de trajectoire respective est déterminée au moins en partant d'une forme respective des sections de trajectoire et d'une vitesse à laquelle la section de trajectoire respective a été parcourue en marche avant, dans lequel l'erreur attendue lors de la marche arrière sur la trajectoire (20) déjà parcourue dans la direction arrière est déterminée à partir des erreurs attendues des sections de trajectoire.

4. Procédé selon la revendication 1 ou 2, **caractérisé en ce que** la trajectoire (20) déjà parcourue est divisée en sections de trajectoire respectivement en fonction de la forme pour la détermination de l'erreur attendue, dans lequel un nombre des points de mesure représentant la section de trajectoire respective est défini ou sera défini au moins en partant d'une forme respective des sections de trajectoire et d'une vitesse à laquelle la section de trajectoire respective a été parcourue en marche avant, dans lequel la longueur de trajet maximale (21) et/ou la valeur seuil d'erreur (5) prédéfinie est prédéfinie ou sera prédéfinie sous la forme d'un nombre maximal de points de mesure.

5. Procédé selon la revendication 3 ou 4, **caractérisé en ce que** pour la détermination des erreurs attendues des sections de trajectoire ou du nombre des points de mesure, des valeurs pour les erreurs respectivement attendues sont recherchées dans une table en fonction de la forme respectivement déterminée et de la vitesse respective.

6. Procédé selon l'une quelconque des revendications précédentes, **caractérisé en ce qu'**une longueur de trajet (22) pouvant encore être mémorisée au maximum est déterminée et sortie en fonction de la capacité de mémoire restante d'une mémoire (3) dans laquelle est mémorisée ou sera mémorisée la trajectoire (20) déjà parcourue.

7. Procédé selon l'une quelconque des revendications précédentes, **caractérisé en ce qu'**un point de départ (11) sur la trajectoire (20) déjà parcourue peut être défini ou est défini, dans lequel après la définition du point de départ (11), une longueur de trajet d'une position actuelle du véhicule (50) sur la trajectoire (20) déjà parcourue jusqu'au point de départ défini (11) est déterminée, dans lequel la longueur de trajet déterminée est comparée avec la longueur de trajet maximale déterminée (20), et dans lequel un avertissement (23) est généré et sorti lorsque la longueur de trajet déterminée est supérieure à la longueur de trajet maximale (21).

8. Procédé selon l'une quelconque des revendications précédentes, **caractérisé en ce qu'**un point de départ (11) sur la trajectoire (20) déjà parcourue est défini lorsqu'une situation est identifiée dans laquelle le système d'assistance à la marche arrière (1) peut être mis en œuvre.

9. Système d'assistance à la marche arrière (1), dans lequel le système d'assistance à la marche arrière (1) peut effectuer de manière au moins partiellement automatisée une marche arrière sur une trajectoire (20) déjà parcourue, comprenant :
un dispositif de commande (2), dans lequel le dispositif de commande (2) est conçu pour déterminer et fournir une longueur de trajet maximale (21) pour la marche arrière sur la trajectoire (20) déjà parcourue en fonction d'une erreur attendue pour la marche arrière sur la trajectoire (20) déjà parcourue, dans lequel la longueur de trajet maximale (21) est la longueur de trajet le long de la trajectoire (20) à laquelle une erreur attendue dépasse une valeur seuil d'erreur prédéfinie (5).

10. Véhicule, comprenant au moins un système d'assistance à la marche arrière selon la revendication 9.
